# EUROPEAN PATENT APPLICATION

(11) **EP 1 732 251 A2**
(43) Date of publication of application: **13.12.2006**
(21) Application number: 06011306.5
(22) Date of filing: 31.05.2006
(51) Int. Cl.: H04H 1/00

(54) **Device and method for recording and reproducing digital multimedia broadcasting contents**

(30) Priority: 09.06.2005 KR 20050049301
(71) Applicant: Samsung Electronics Co., Ltd., Yeongtong-gu Suwon-si, Gyeonggi-do (KR)
(72) Inventor: Lee, Ho-Jun Samsung Electronics Co. Ltd., Suwon-si Gyeonggi-do (KR); Kum, Dong-Jun Samsung Electronics Co. Ltd., Suwon-si Gyeonggi-do (KR)
(74) Representative: Grünecker, Kinkeldey, Stockmair & Schwanhäusser Anwaltssozietät

(57) **Abstract**

A method of recording and reproducing DMB contents in a terminal having a DMB reception function and a wireless Internet function is provided. The terminal extracts information about contents being provided from EPG information and stores it, in response to a storing request from a user during viewing or listening to DMB broadcasting. The terminal is connected to a multimedia server for providing DMB contents on line in response to a recording request or a reproduction request for the contents corresponding to the contents information from the user, requests the contents corresponding to the contents information from the multimedia server, receives the contents from the multimedia server, and records or reproduces the contents.

## Description

The present invention relates generally to digital multimedia broadcasting (DMB), and in particular, to a device and a method of recording and reproducing DMB contents in a terminal enabled with DMB reception and wireless Internet.

Typically, a DMB terminal equipped with a DMB reception function is able to record DMB contents that a user is now viewing or hearing, as well as receive the DMB broadcasting. The user records the DMB contents in a recording medium of the DMB terminal if he wants to view or hear them later. The recording medium can be a flash memory, a hard disk drive (HDD), etc.

Due to size or cost constraints inherent to portable terminals, the DMB terminal is also limited in the recording capacity of the recording medium. The resulting limit on the number of recordable contents and available capacity in the DMB terminal may make it impossible to record DMB contents being provided.

Since the recording medium is accessed to record the DMB contents during viewing or listening to the DMB broadcast, the load and battery consumption of the DMB terminal increase and thus performance degradation may result.

Moreover, the contents recording typically starts from the current time point. Hence, if the user decides to record the DMB contents midway through viewing or listening to them, the entire contents are not stored. For example, if the user records some music midway through enjoying it on a DMB audio channel, he can only hear the music later for the time recorded rather than the entire music selection.

It is the object of the present invention to provide a method of recording or reproducing contents at a later time even though the contents being provided are not recorded while a user views or listens to the contents.

This object is solved by the subject matter of the independent claims.

Preferred embodiments are defined in the dependent claims.

According to an aspect of the present invention, there is provided a method of recording or reproducing the entire contents even though the contents being provided are not recorded from the start of the contents while a user views or listens to the contents.

According to another aspect of the present invention, there is provided a device for recording or reproducing the entire contents even though the contents being provided are not recorded from the start of the contents while a user views or listens to the contents.

The above is achieved by providing a method of recording and reproducing DMB contents in a terminal having a DMB reception function and a wireless internet function. The terminal extracts information about contents being provided from Electronic Program Guide (EPG) information and stores it, in response to a storing request from a user during viewing or listening to DMB broadcasting. The terminal is connecting to a multimedia server for providing DMB contents on line in response to a recording request or a reproduction request for the contents corresponding to the contents information from the user, requests the contents corresponding to the contents information from the multimedia server, receives the contents from the multimedia server, and records or reproduces the contents.

Upon receipt of a recording start request followed by a recording end request from the user, the contents information is stored together with period information indicating the elapse times of the contents at a recording start requested time and at a recording end requested time. In response to a contents recording or reproduction request for the entire contents or a part of the contents, the terminal is connected to the multimedia server, receives the requested contents corresponding to the contents information or the period information from the multimedia server, and records or reproduces the contents.

The present invention will become more apparent from the following detailed description when taken in conjunction with the accompanying drawings in which:
FIG. 1 is a block diagram of a terminal according to an embodiment of the present invention;
FIG. 2 is a flowchart illustrating an operation for recording contents information according to the embodiment of the present invention;
FIG. 3 is a diagram illustrating an example of a network configuration, referred to for describing recording and reproducing of contents according to the embodiment of the present invention;
FIG. 4 is a flowchart illustrating an operation for recording and reproducing contents according to the embodiment of the present invention;
FIG. 5 is a flowchart illustrating an operation for recording contents information according to a second embodiment of the present invention;
FIG. 6 is a flowchart illustrating an operation for recording and reproducing contents according to the second embodiment of the present invention; and
FIG. 7 is a flowchart illustrating an operation of a multimedia server according to an embodiment of the present invention.

Preferred embodiments of the present invention will be described herein below with reference to the accompanying drawings. In the following description, well-known functions or constructions are not described in detail since they would obscure the invention in unnecessary detail.

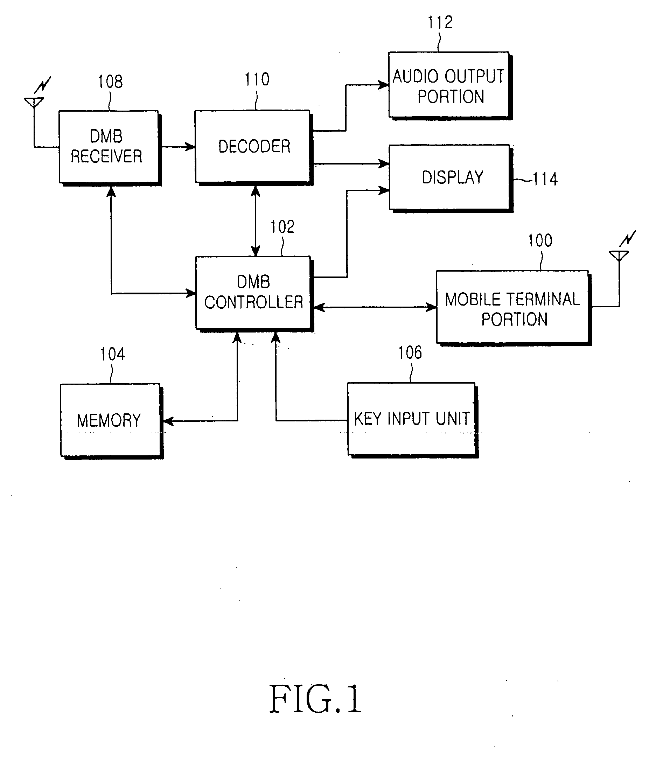

FIG. 1 is a block diagram of a terminal according to an embodiment of the present invention. The terminal is a mobile terminal co-functioning as a DMB receiver enabled with DMB reception and wireless Internet, to which the present invention is applied. Referring to FIG. 1, a DMB receiver 108 tunes a DMB signal received through an antenna and converts it to a baseband signal under the control of a DMB controller 102. A decoder 110 decodes the baseband signal according to a broadcasting service selected by the DMB controller 102 and provides an audio signal to an audio output portion 112 and a video signal to a display 114.

The DMB controller 102 invokes a program from a memory 104 according to a key input from a user through a key input unit 106, such as a keypad, and performs a DMB reception operation by controlling the DMB receiver 108, the decoder 110, and the display 114. The DMB controller 102 also interworks with a mobile terminal portion 100. The mobile terminal portion 100 provides phone calls, data communications, and wireless Internet functionality.

The memory 104 stores programs and reference data for processing and control of the DMB controller 102 and provides a working memory for the DMB controller 102. It also provides an area for storing updatable data. The memory 104 includes a recording medium on which to record contents, as described before. According to embodiments of the present invention as described below, the DMB controller 102 records contents, and contents information and period information for recording and reproducing the contents in the memory 104.

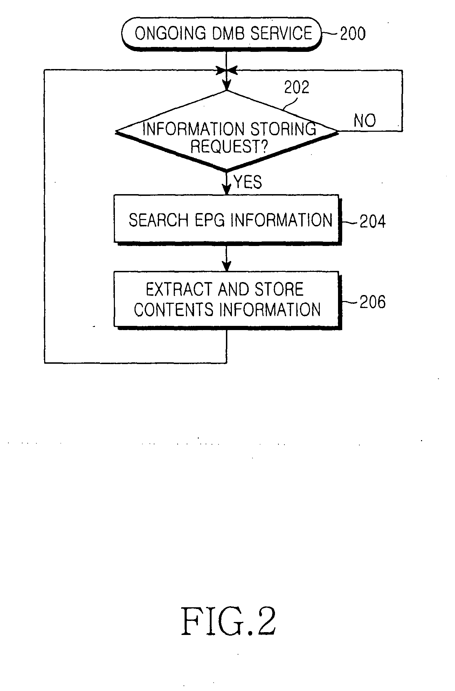

Referring to FIG. 2, if the user wants to record or reproduce later DMB contents during viewing or listening to the DMB contents in step 200, he requests storing of information or contents through the key input unit 106 in step 202. The information storing request is made by selecting a preset menu or by pressing a predetermined key.

The DMB controller 102 searches EPG (Electronic Program Guide) information in step 204 and extracts information about the DMB contents from the EPG information and stores it in the memory 104 in step 206. The contents information includes, for example, a program title in the case of a video channel, or a song title and a singer name in the case of an audio channel. It further includes a PID (Packet Identifier) identifying a broadcasting station and the channel.

Upon receipt of a recording or reproduction request from the user at a later time, the DMB controller 102 is connected to a multimedia server of the broadcasting station corresponding to the contents information through the mobile terminal portion 100, requests the DMB contents, downloads them, and records or reproduces them. To allow the DMB controller 102 to connect to the multimedia server of a broadcasting station identified by a PID, the memory 104 preserves the URLs (Uniform Resource Locators) of the multimedia servers of broadcasting stations with respect to the PIDs of the broadcasting stations.

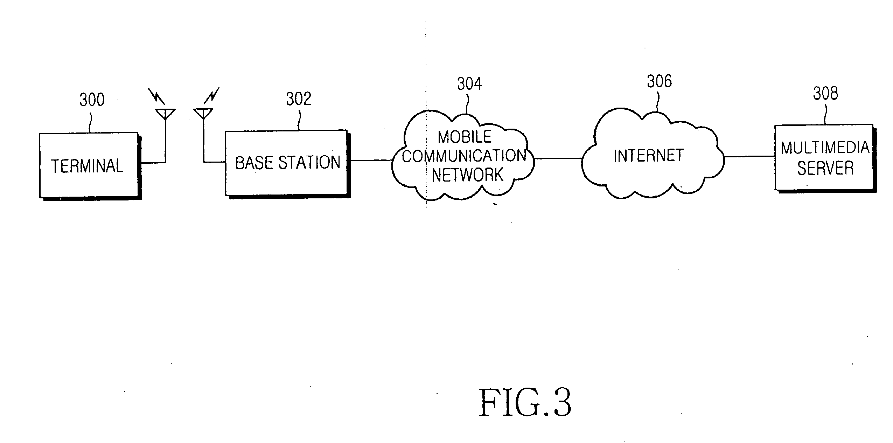

FIG. 3 illustrates an example of a network configuration, referred to for describing recording and reproducing of contents according to the embodiment of the present invention. A terminal 300 having the configuration illustrated in FIG. 1 is connected to a mobile communication network 304 through a base station 302. Then it is connected to a multimedia sever 308 through the Internet 306 using its wireless Internet function. The terminal 300 downloads contents from the multimedia sever 308 and records or reproduces them. The multimedia server 308 is a server through which a broadcasting station provides DMB contents on line. The multimedia server 308 can be a VOD (Video On Demand) server and/or an MOD (Music On Demand) server.

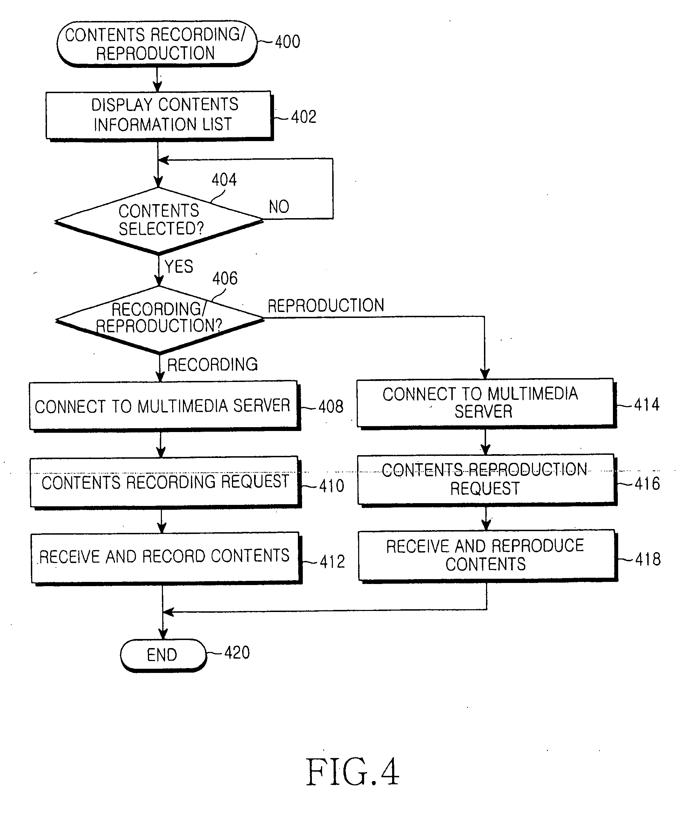

Referring to FIG. 4, if the user wants to record or reproduce the contents corresponding to the stored contents information, he selects a contents record/reproduce menu through the key input unit 106. The contents record/reproduce menu is a menu designated to record or reproduce contents corresponding to stored contents information according to the embodiment of the present invention.

Upon selection of the contents record/reproduce menu by the user in step 400, the DMB controller 102 displays a list of contents information stored in the memory 104 on the display 114 in step 402. When the user selects contents to be recorded or reproduced through the key input unit 106 referring to the contents information list in step 404, the DMB controller 102 receives a recording request or a reproduction request for the selected contents through the key input unit 106 in step 406. In the case of a recording request, the DMB controller 102 proceeds to step 408. In the case of a reproduction request, the DMB controller 102 goes to step 414.

In step 408, the DMB controller 102 is connected to the multimedia server 308 through the mobile terminal portion 100. The DMB controller 102 requests recording of the selected contents to the multimedia server as described before in step 410. The multimedia server 308 then sends the requested contents to the terminal in a file of a predetermined recording format, which will be described below. The DMB controller 102 receives the contents from the multimedia server 308 and stores them in the memory 104 in step 412 and terminates the contents recording in step 420.

In step 414, the DMB controller 102 is connected to the multimedia server 308 through the mobile terminal portion 100. The DMB controller 102 requests reproduction of the selected contents to the multimedia server as described before in step 416. The multimedia server 308 then sends the requested contents to the terminal in a file of a predetermined reproduction format, which will be described below. The DMB controller 102 receives the contents from the multimedia server 308 and reproduces them in step 418 and terminates the contents reproduction in step 420.

In this way, only information about contents being provided is stored during viewing or listening to the contents, instead of recording them. The contents corresponding to the contents information is later requested, downloaded from the multimedia server, and recorded or reproduced.

Therefore, even though the currently available recording capacity may not suffice for recording the contents being serviced, the contents can be recorded at a later time or reproduced when necessary. Also, since the contents are recorded after viewing or listening to the DMB broadcast, the increase of the load and battery consumption of the terminal caused by contents recording during viewing or listening to the DMB broadcast is minimized, thereby preventing performance degradation. Furthermore, even if the contents being serviced are not recorded from the start while the user views or listens to the contents, the contents can be recorded or reproduced in their entirety using the contents information.

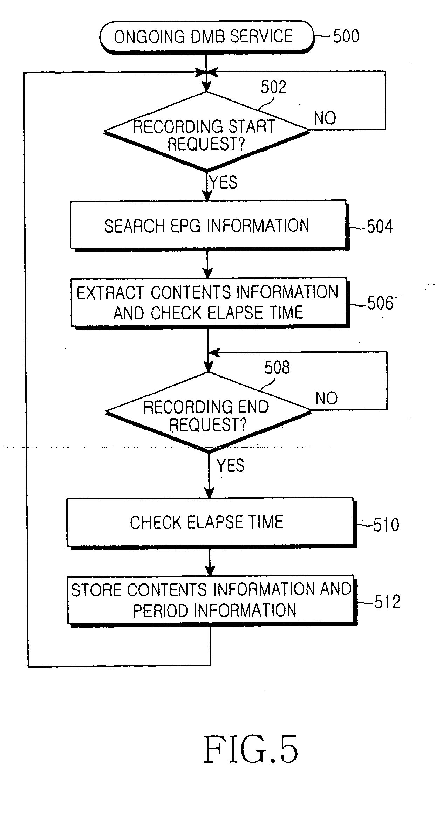

FIG. 5 is a flowchart illustrating an operation for recording contents information according to an alternative embodiment of the present invention. This permits the user to record or reproduce the contents in its entirety or only a part of contents being provided. Referring to FIG. 5, if the user wants to record or reproduce a later part of contents being provided during viewing or listening the DMB broadcast in step 500, he requests a recording start and then a recording end through the key input unit 106. The recording start and end requests are made by selecting a preset menu or by pressing a predetermined key.

Upon receipt of a recording start request from the user through the key input unit 106 in step 502, the DMB controller 102 searches EPG information in step 504 and extracts information about the contents being serviced from the EPG information as in the procedure of FIG. 2 and assesses the current elapsed time of the contents in step 506.

Upon receipt of a recording end request from the user through the key input unit 106 in step 508, the DMB controller 102 checks the current elapsed time of the contents in step 510.

In step 512, the DMB controller 102 stores period information indicating the elapsed times of the contents at the recording start requested time and at the recording end requested time, together with contents information in the memory 104.

If the user wants to record or reproduce the entire contents corresponding to the contents information or only a designated part of the contents corresponding to the period information, he selects a contents record/reproduce menu through the key input unit 106.

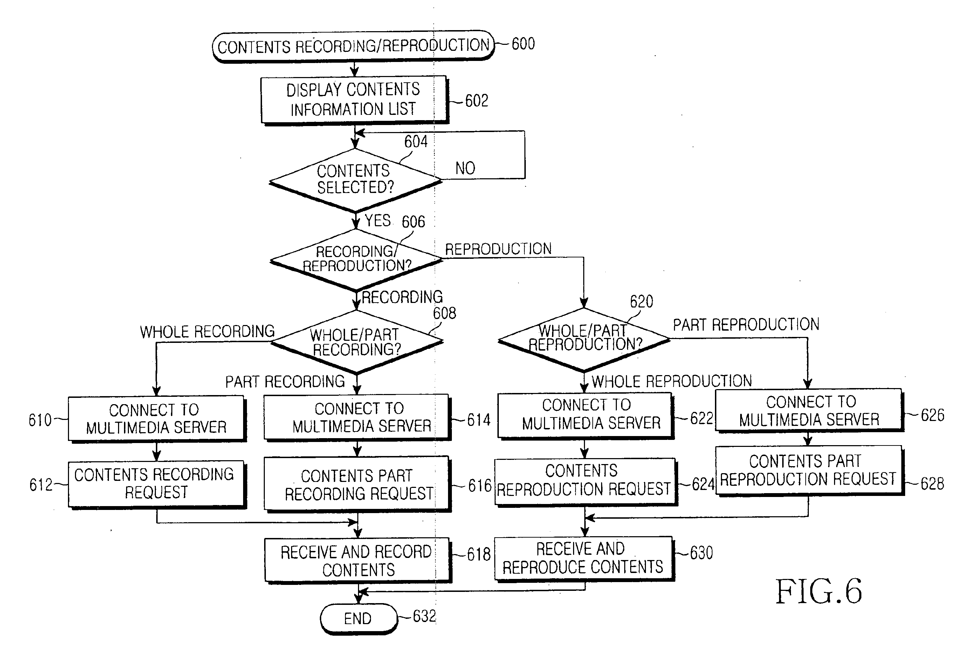

Referring to FIG. 6, upon selection of the contents record/reproduce menu from the user in step 600, the DMB controller 102 displays a list of contents information stored in the memory 104 on the display 114 in step 602. When the user selects, in step 604, contents to be recorded or reproduced through the key input unit 106 referring to the contents information list, the DMB controller 102 receives a recording request or a reproduction request for the selected contents through the key input unit 106 in step 606. In the case of a recording request, the DMB controller 102 proceeds to step 608. In the case of a reproduction request, the DMB controller 102 goes to step 620.

In step 608, the DMB controller 102 receives a whole recording request for recording the selected contents in their entirety, or a part recording request for recording a part of the selected contents, as described before. In the former case, the DMB controller 102 goes to step 610 and in the latter case, it goes to step 614.

The DMB controller 102 is connected to the multimedia server 308 through the mobile terminal portion 100 in step 610 and in step 612 requests recording of the entire selected contents to the multimedia server 308 as described before. The multimedia server 308 then sends the requested contents to the terminal in a file of the predetermined recording format.

The DMB controller 102 is connected to the multimedia server 308 through the mobile terminal portion 100 in step 614 and in step 616 requests recording of the part of the selected contents corresponding to the period information to the multimedia server 308. The multimedia server 308 then sends the requested contents part to the terminal in a file of the predetermined recording format.

In step 612 or step 616, the DMB controller 102 receives and records the requested contents from the multimedia server 308 in step 618 and stores them in the memory 104. The DMB controller 102 terminates the contents recording in step 632.

The DMB controller 102 receives a whole reproduction request for reproducing the selected contents in their entirety, or a part reproduction request for reproducing a part of the selected contents through the key input unit 106 in step 620. In the former case, the DMB controller 102 goes to step 622 and in the latter case, it goes to step 626.

The DMB controller 102 is connected to the multimedia server 308 through the mobile terminal portion 100 in step 622 and in step 624 requests reproduction of the entire selected contents to the multimedia server 308 as described before. The multimedia server 308 then sends the requested contents to the terminal in a file of the predetermined reproduction format.

The DMB controller 102 is connected to the multimedia server 308 through the mobile terminal portion 100 in step 626 and in step 628 requests reproduction of the part of the selected contents corresponding to the period information to the multimedia server 308. The multimedia server 308 then sends the requested contents part to the terminal in a file of the predetermined reproduction format.

In step 624 or step 628, the DMB controller 102 receives the requested contents from the multimedia server 308 and reproduces them in step 630. The DMB controller 102 terminates the contents reproduction in step 632.

In this way, only contents information and period information about contents being provided are stored during viewing or listening to the contents, instead of recording them. The contents corresponding to the contents information or the contents part corresponding to the period information are later requested, downloaded from the multimedia server, and recorded or reproduced.

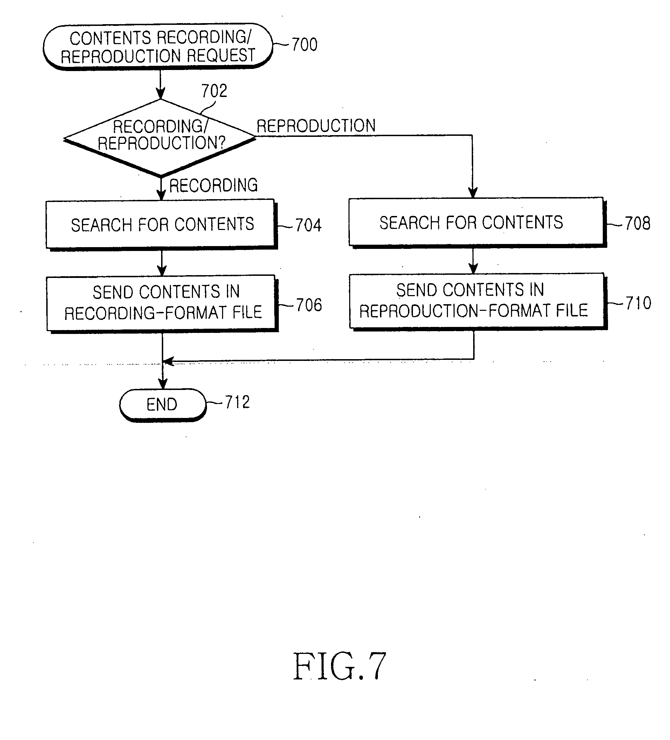

Referring to FIG. 7, the multimedia server 308 receives a contents recording/reproduction request from the terminal 300 in step 700 and determines whether the request is a recording or reproduction request in step 702.

In the case of a recording request, the multimedia server 308 searches for contents corresponding to contents information related to the recording request in step 704 and sends the searched contents to the terminal 300 in a file of the predetermined recording format in step 706. If the recording request is a request to record the entire contents, the multimedia server 308 sends the entire contents to the terminal 300. If the recording request is a request to record a part of the contents, the multimedia server 308 sends the contents part corresponding to the period information to the terminal 300. After sending the contents, the multimedia server 308 ends the procedure in step 712.

In the case of a reproduction request, the multimedia server 308 searches for contents corresponding to contents information related to the reproduction request in step 708 and sends the searched contents to the terminal 300 in a file of the predetermined reproduction format in step 710. If the reproduction request is a request for reproduction of the entire contents, the multimedia server 308 sends the entire contents to the terminal 300. If the reproduction request is a request for reproduction of a part of the contents, the multimedia server 308 sends the contents part corresponding to the period information to the terminal 300. After sending the contents, the multimedia server 308 ends the procedure in step 712.

In accordance with the present invention as described above, contents being provided can be recorded or reproduced at a later time even though they are not recorded during viewing or listening to the contents. Also, the contents can be recorded or reproduced in their entirety even though they are not recorded from the start during viewing or listening to the contents.

Therefore, even if the current available recording capacity is not sufficient to record contents being provided, the contents can be recorded later or reproduced at a desired time. Since the contents are recorded after the DMB broadcasting is viewed or heard, the increase of the load and battery consumption of the terminal caused by contents recording during viewing or listening to the DMB broadcast is minimized, thereby preventing performance degradation. Furthermore, even if the contents being provided are not recorded from the start while the user views or listens to the contents, the contents can be recorded or reproduced in their entirety using contents information.

While the DMB contents being provided may be recorded free of charge, contents provisioning from the multimedia server according to the present invention can be charged, thereby creating a novel additional DMB service.

While the invention has been shown and described with reference to certain preferred embodiments thereof, they are merely exemplary applications. Particularly, while contents are recorded and reproduced in the embodiments of the present invention, only one of recording and reproduction can be performed. In addition, while contents are wholly or partially recorded or reproduced in the embodiments of the present invention, only the entire or partial contents can be recorded or reproduced. Thus, it will be understood by those skilled in the art that various changes in form and details may be made therein without departing from the scope of the invention as defined by the appended claims.

## Claims

1. A method of recording digital multimedia broadcasting contents in a terminal having a digital multimedia broadcasting reception function and a wireless Internet function, comprising the steps of:
extracting information about contents being provided from electronic program guide information and storing the contents information, in response to a storing request from a user during viewing or listening to digital multimedia broadcasting; and
connecting to a multimedia server for providing digital multimedia broadcasting contents on line in response to a contents recording request for contents corresponding to the contents information from the user, requesting the contents from the multimedia server, receiving the contents from the multimedia server, and recording the contents.

2. A method of recording digital multimedia broadcasting contents in a terminal having a digital multimedia broadcasting reception function and a wireless Internet function, comprising the steps of:
extracting information about contents being provided from electronic program guide information in response to a recording start request followed by a recording end request from a user during viewing or listening to digital multimedia broadcasting and storing the contents information and period information indicating the elapsed times of the contents at a recording start requested time and at a recording end requested time; and
connecting to a multimedia server for providing digital multimedia broadcasting contents on line in response to a contents recording request for contents corresponding to the contents information from the user, requesting part of the contents corresponding to the period information from the multimedia server, receiving the requested contents from the multimedia server, and recording the contents.

3. A method of recording digital multimedia broadcasting contents in a terminal having a digital multimedia broadcasting reception function and a wireless Internet function, comprising the steps of:
extracting information about contents being provided from electronic program guide information in response to a recording start request followed by a recording end request from a user during viewing or listening to digital multimedia broadcasting and storing the contents information and period information indicating the elapsed times of the contents at a recording start requested time and at a recording end requested time;
receiving a recording request for the entire contents or part of the contents from the user;
connecting to a multimedia server for providing digital multimedia broadcasting contents on line in response to the recording request for the entire contents from the user, requesting the contents corresponding to the contents information from the multimedia server, receiving the requested contents from the multimedia server, and recording the contents; and
connecting to the multimedia server in response to the recording request for part of the contents from the user, requesting the part of the contents corresponding to the period information from the multimedia server, receiving the requested part of the contents from the multimedia server, and recording the part of the contents.

4. A method of reproducing digital multimedia broadcasting contents in a terminal having a digital multimedia broadcasting reception function and a wireless Internet function, comprising the steps of:
extracting information about contents being provided from electronic program guide information and storing the contents information, in response to a storing request from a user during viewing or listening to digital multimedia broadcasting; and
connecting to a multimedia server for providing digital multimedia broadcasting contents on line in response to a contents reproduction request for contents corresponding to the contents information from the user, requesting the contents from the multimedia server, receiving the contents from the multimedia server, and reproducing the contents.

5. A method of reproducing digital multimedia broadcasting contents in a terminal having a digital multimedia broadcasting reception function and a wireless Internet function, comprising the steps of:
extracting information about contents being provided from electronic program guide information in response to a recording start request followed by a recording end request from a user during viewing or listening to digital multimedia broadcasting and storing the contents information and period information indicating the elapsed times of the contents at a recording start requested time and at a recording end requested time; and
connecting to a multimedia server for providing digital multimedia broadcasting contents on line in response to a contents reproduction request about contents corresponding to the contents information from the user, requesting part of the contents corresponding to the period information from the multimedia server, receiving the requested contents from the multimedia server, and reproducing the contents.

6. A method of reproducing digital multimedia broadcasting contents in a terminal having a digital multimedia broadcasting reception function and a wireless Internet function, comprising the steps of:
extracting information about contents being provided from electronic program guide information in response to a recording start request followed by a recording end request from a user during viewing or listening to digital multimedia broadcasting and storing the contents information and period information indicating the elapsed times of the contents at a recording start requested time and at a recording end requested time;
receiving a reproduction request for the entire contents or part of the contents from the user;
connecting to a multimedia server for providing digital multimedia broadcasting contents on line in response to the reproduction request for the entire contents from the user, requesting the contents corresponding to the contents information from the multimedia server, receiving the requested contents from the multimedia server, and reproducing the contents; and
connecting to the multimedia server in response to the reproduction request for part of the contents from the user, requesting the part of the contents corresponding to the period information from the multimedia server, receiving the requested part of the contents from the multimedia server, and reproducing the part of the contents.

7. A method of recording and reproducing digital multimedia broadcasting contents in a terminal having a digital multimedia broadcasting reception function and a wireless Internet function, comprising the steps of:
extracting information about contents being provided from electronic program guide information and storing the contents information, in response to a storing request from a user during viewing or listening to digital multimedia broadcasting;
receiving at least one of a recording request and a reproduction request for the contents corresponding to the contents information from the user;
connecting to a multimedia server for providing digital multimedia broadcasting contents on line in response to the contents recording request, requesting the contents corresponding to the contents information from the multimedia server, receiving the contents from the multimedia server, and recording the contents; and
connecting to the multimedia server in response to the contents reproduction request, requesting the contents corresponding to the contents information from the multimedia server, receiving the contents from the multimedia server, and reproducing the contents.

8. A device for recording digital multimedia broadcasting contents, said device being for use in a terminal having a digital multimedia broadcasting reception function and a wireless Internet function, wherein the device is adapted to operate according to one of claims 1 to 3.

9. A device for reproducing digital multimedia broadcasting contents, said device being for use in a terminal having a digital multimedia broadcasting reception function and a wireless internet function, wherein the device is adapted to operate according to one of claims 4 to 6.

10. A device for recording and reproducing digital multimedia broadcasting contents, said device being for use in a terminal having a digital multimedia broadcasting reception function and a wireless Internet function, wherein the device is adapted to operate according to claim 7.
